# EUROPEAN PATENT SPECIFICATION

(11) **EP 2 108 476 B1**
(45) Date of publication and mention of the grant of the patent: **13.12.2017**
(21) Application number: 08007060.0
(22) Date of filing: 09.04.2008
(51) Int. Cl.: B23K 26/34, B23K 26/14, B23K 9/04, B23K 35/30, C22C 38/18, B23K 101/00

(54) **Method to coat a metallic substrate with low alloy steel layer**
Verfahren zur Beschichtung eines metallischen Substrats mit einer Schicht aus niedrig legiertem Stahl
Procédé de revêtement d'un substrat métallique avec un revêtement à faible alliage d'acier

(43) Date of publication of application: 14.10.2009
(73) Proprietor: Siemens Aktiengesellschaft, 80333 München (DE)
(72) Inventor: Childs, Chistopher, Lincoln LN1 2FR (GB); Marchant, Geoffrey, Lincoln LN6 9SY (GB)
(74) Representative: Maier, Daniel Oliver

(56) References cited:
- EP-A- 1 835 189
- EP-A- 1 898 048
- WO-A-2006/111520
- US-A- 4 300 474
- NOWOTNY S: "BESCHICHTEN, REPARIEREN UND GENERIEREN DURCH PRAEZISIONS-AUFTRAGSCHWEISSEN MIT LASERSTRAHLEN//CLADDING, REPAIR, AND FREEFORMING BY BUILD-UP WELDING USING LASER IRRADIATION" VAKUUM IN FORSCHUNG UND PRAXIS, WILEY-VCH, WEINHEIM, DE, vol. 14, no. 1, 1 February 2002 (2002-02-01), pages 33-37, XP008053341 ISSN: 0947-076X

## Description

The invention relates to a method to coat a metallic substrate with a low alloy steel layer.

Components which face extraordinary stress during use are often made of high alloy steel. An example for such a component is a shaft journal of a turbine which run on bearings.

A problem of high alloy steel shaft journals is a phenomena called wire wooling. High alloy steel comprises up to 10 percent of chrome. Under heat and pressure this chrome combines with particles in the lubricant oil of the bearings and carbon from the oil to form chrome-carbide particles. These particles are hard enough to damage the shaft journal, e.g. part of its surface is scraped off by the particles.

It is known in the art to cover high alloy steel shaft journals with a coating of low alloy steel to prevent wire wooling. This low alloy steel coating comprises only a small amount of chrome. Accordingly no chrome-carbide particles are formed which can damage the shaft journal.

The known methods to provide a low alloy steel coating on a high alloy steel shaft journal comprise a number of steps. Further in most cases energy consumption is high. Accordingly the costs for the coating of a shaft journal are significant. Also known methods fail to ensure a strong bond between the surface of the shaft journal and the low alloy steel coating. This may result in a failure of the coated shaft journal.

EP 1 835 189 A2 discloses a method of preparing a rotating member to enhance bearing durability comprising, applying a metal material to a surface of the rotor orthogonal to a longitudinal axis of the rotor, the material having a chromium content less than a chromium content of the rotating member, and surfacing said metal material orthogonal to the axis of the rotor. Further disclosed is an enhanced bearing durability rotating member comprising, a rotor with a metal material surface orthogonal to a longitudinal axis of the rotor having less chromium content than the rotor, and a boundary layer between the metal material surface and the rotor orthogonal to the axis of the rotor.

S. Nowotny, "Beschichten, Reparieren und Generieren durch Prazisions-Auftragschweißen mit Laserstrahlen", Wiley-VCH Verlag GmbH, Weinheim, vol. 14, no. 1, p.33-37 (1 February 2002) discloses that laser beam build-up welding belongs to the technical group of thermal coating. With a coating thickness between 0.1 and 3 mm it is positioned close to PTA and TIG cladding. The special features consist in the excellent controllability of the cladding process, high precision of the material deposition, low thermal influence on the work piece and low base material mixing, the absence of mechanical effects on the melt pool as well as the large number of coating and substrate materials available for the manufacturing process.

It is therefore an object of the present invention to provide a method to coat a metallic substrate with a low alloy steel layer which is easy, cheap and guarantees a strong bond between the substrate and the coating.

This object is solved by a method and a coated metallic component according to the independent claims.

The metallic substrate may be coated with the low alloy steel layer by laser welding. The metallic substrate is a high nickel superalloy substrate and is coated with the low alloy steel layer, the low alloy steel layer having a Cr content of less than 5%.

Laser welding is generally known in the art. For example GB 2 052 566 A discloses a method for laser application of a hard surface alloy. A metallic coating is applied to a metallic substrate by directing a laser beam on to the substrate and simultaneously directing a gas stream containing entrained particles of the coating material onto the area of laser impingement on the substrate. The particles are melted by the laser beam to form a pool of molten coating metal. A relative movement is effected between the laser beam and the substrate so that the pool of molten coating metal traverses the substrate to form a solidified metallic coating which is fused to the metallic substrate.

The low alloy coating can be applied to the metallic substrate in an easy and cheap way by the laser welding process of the above kind. With this process an extraordinary strong bond between the substrate and the low alloy steel coating is achieved. Further the process gives a very small heat affected zone and dilution effects compared to conventional welding techniques making it particularly suitable for small diameter shafts.

Preferably the metallic substrate is coated with the low alloy steel layer by powder through laser welding or by wire feed laser welding.

According to a first embodiment of the invention a high nickel superalloy steel substrate especially made of IN718 is coated with the low alloy steel layer. IN718 is also called Inconel 718. Typically it comprises 50-55 % Ni, 17-21 % Cr, 4.75-5.5 % Nb, 2.8-3.3 % Mo, 0.65-1.15 % Ti, 0.2-0.8 % Al and Fe balance. Further elements can be present..

Preferably an FV535 substrate is coated with the low alloy steel layer.

It is also possible that the metallic substrate is coated with the low alloy steel layer having a Cr content of less than 4 % and most preferably of less than 3 %.

Preferably the metallic substrate is coated with a low alloy steel layer of 0.5 to 3.0 mm, preferably of 0.8 to 2.5 mm and most preferably of 1.0 to 2.0 mm thickness.

According to another embodiment of the invention a metallic shaft journal is coated with a low alloy steel layer. Preferably the metallic shaft journal is coated with multiple layers of low alloy steel. In this way dilution effects from the substrate are limited.

The invention also relates to a coated metallic component which is produced according to a method of the invention. This component shows excellent properties with respect to durability because of an extraordinary strong bond between the metallic substrate and the low alloy steel coating.

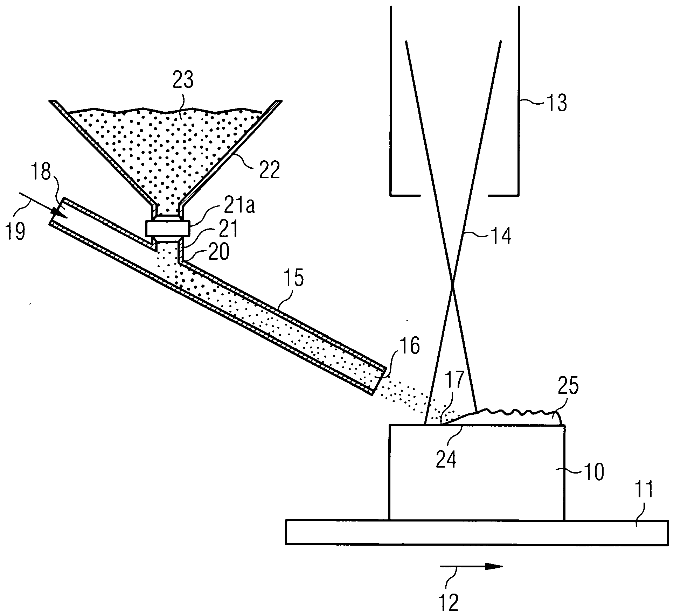

In the following the invention will be described in detail with respect to the attached drawing.

The only drawing shows a schematic representation of a device to coat a metallic substrate with a low alloy steel layer.

A metallic substrate 10, for example a shaft journal made of IN 718, to be coated is mounted on a support 11 which is adapted by means not shown to translate at a constant speed in the direction indicated by an arrow 12. A laser 13 is mounted vertically above the support 11 so that its beam 14 is perpendicular to the direction of the support translation 12.

An inclined tube 15 is mounted adjacent to the laser 13 so that its lower outlet 16 is directed towards an area of impingement 17 of the laser beam 14 on the substrate 10. An upper inlet 18 of the tube 15 is connected to a source of argon so that argon flows in the direction indicated by the arrow 19, through the tube 15 and on the area of laser beam impingement 17.

Instead of the inclined tube 15 as a separate side feed nozzle coaxial feed nozzles can also be used.

At a position 20 intermediate the tube inlet and outlet 18 and 16 a further tube 21 is connected to the tube 15. The further tube 21 interconnects the interior of the tube 15 with a hopper 22 containing low alloy steel particles 23, for example made of EN25, to be coated on the substrate 10. The particles 23 fall under gravity through the tube 21 to be metered into an argon stream passing through the tube 15. Optionally the particles 23 can be pressure fed through the tube 15. It is also possible to other gas or gas mixtures like air instead of the argon stream.

An appropriate metering device 21a is provided in the tube 21 to ensure that the particles 23 are metered into the argon stream at a suitable constant rate. As soon as the particles enter the tube 15, they become entrained in the argon stream and directed thereby on to the area of laser beam impingement 17.

As soon as they reach the area of laser beam impingement 17, the particles 23 are melted by the laser beam 14 to form a pool 24 of molten coating material. Translation of the substrate support 11 at a constant speed in the direction indicated by the arrow 12 results in a pool of molten low alloy steel 24 similarly translating to leave a solidified coating 25. Since the metallic substrate is also heated by the laser beam 14, fusion takes place between the molten coating material 24 and the substrate 10. Consequently the bond between the final solidified coating 25 and the substrate 10 is extremely strong.

## Claims

1. A method to coat a metallic substrate (10) with a low alloy steel layer (25),
wherein the metallic substrate (10) is coated with the low alloy steel layer (25) by laser welding, **characterized in that** a high nickel superalloy substrate (10) is coated with the low alloy steel layer (25) and the low alloy steel layer (25) having a Cr content of less than 5%.

2. The method according to claim 1,
**characterized in that** the metallic substrate (10) is coated with the low alloy steel layer (25) by powder through laser welding.

3. The method according to claim 1,
**characterized in that** the metallic substrate (10) is coated with the low alloy steel layer (25) by wire feed laser welding.

4. The method according to any one of claims 1-3,
**characterized in that** an IN718 substrate (10) is coated with the low alloy steel layer (25).

5. The method of any of the preceding claims,
**characterized in that** the metallic substrate (10) is coated with a low alloy steel layer (25) having a Cr content of less than 4% and most preferably of less than 3%.

6. The method according to claim 5,
**characterized in that** the metallic substrate (10) is coated with an EN25 layer (25).

7. The method of any of the preceding claims,
**characterized in that** the metallic substrate (10) is coated with a low alloy steel layer (25) of 0.5 to 3.0 mm, preferably of 0.8 to 2.5 mm and most preferably of 1.0 to 2.0 mm thickness.

8. The method according to any of the preceding claims,
**characterized in that** a metallic shaft journal (10) is coated with a low alloy steel layer (25).

9. The method of claim 8,
**characterized in that** the metallic shaft journal (10) is coated with multiple layers of low alloy steel.

10. A coated metallic component having a metallic substrate (10) coated with a low alloy steel layer (25),
wherein the metallic substrate (10) is coated with the low alloy steel layer (25) by laser welding, **characterized in that** a high nickel superalloy substrate (10) is coated with the low alloy steel layer (25) and the low alloy steel layer (25) having a Cr content of less than 5%.

## Patentansprüche

1. Verfahren zur Beschichtung eines metallischen Substrats (10) mit einer Schicht aus niedrig legiertem Stahl (25), wobei das metallische Substrat (10) mit der Schicht aus niedrig legiertem Stahl (25) durch Laserschweißen beschichtet wird, **dadurch gekennzeichnet, dass** ein Substrat aus Superlegierung mit hohem Nickelgehalt (10) mit der Schicht aus niedrig legiertem Stahl (25) beschichtet wird und die Schicht aus niedrig legiertem Stahl (25) einen Cr-Gehalt von weniger als 5 % aufweist.

2. Verfahren nach Anspruch 1,
**dadurch gekennzeichnet, dass** das metallische Substrat (10) mit der Schicht aus niedrig legiertem Stahl (25) durch Laser-Pulver-Schweißen beschichtet wird.

3. Verfahren nach Anspruch 1,
**dadurch gekennzeichnet, dass** das metallische Substrat (10) mit der Schicht aus niedrig legiertem Stahl (25) durch Laserschweißen mit Drahtzuführung beschichtet wird.

4. Verfahren nach einem der Ansprüche 1-3,
**dadurch gekennzeichnet, dass** ein IN718-Substrat (10) mit der Schicht aus niedrig legiertem Stahl (25) beschichtet wird.

5. Verfahren nach einem der vorhergehenden Ansprüche,
**dadurch gekennzeichnet, dass** das metallische Substrat (10) mit einer Schicht aus niedrig legiertem Stahl (25) beschichtet wird, die einen Cr-Gehalt von weniger als 4 % und, am stärksten bevorzugt, von weniger als 3 % aufweist.

6. Verfahren nach Anspruch 5,
**dadurch gekennzeichnet, dass** das metallische Substrat (10) mit einer Schicht aus EN25 (25) beschichtet wird.

7. Verfahren nach einem der vorhergehenden Ansprüche,
**dadurch gekennzeichnet, dass** das metallische Substrat (10) mit einer Schicht aus niedrig legiertem Stahl (25) von 0,5 bis 3,0 mm, vorzugsweise von 0,8 bis 2,5 mm und am stärksten bevorzugt von 1,0 bis 2,0 mm Dicke beschichtet wird.

8. Verfahren nach einem der vorhergehenden Ansprüche,
**dadurch gekennzeichnet, dass** ein metallischer Wellenzapfen (10) mit einer Schicht aus niedrig legiertem Stahl (25) beschichtet wird.

9. Verfahren nach Anspruch 8,
**dadurch gekennzeichnet, dass** der metallische Wellenzapfen (10) mit mehreren Schichten aus niedrig legiertem Stahl beschichtet wird.

10. Beschichtete metallische Komponente, die ein metallisches Substrat aufweist, das mit einer Schicht aus niedrig legiertem Stahl (25) beschichtet ist,
wobei das metallische Substrat (10) mit der Schicht aus niedrig legiertem Stahl (25) durch Laserschweißen beschichtet ist, **dadurch gekennzeichnet, dass** ein Substrat aus Superlegierung mit hohem Nickelgehalt (10) mit der Schicht aus niedrig legiertem Stahl (25) beschichtet ist und die Schicht aus niedrig legiertem Stahl (25) einen Cr-Gehalt von weniger als 5 % aufweist.

## Revendications

1. Procédé de revêtement d'un substrat métallique (10) avec une couche (25) d'acier faiblement allié,
étant entendu que l'on revêt le substrat métallique (10) avec la couche (25) d'acier faiblement allié par soudage au laser, **caractérisé en ce que** l'on revêt un substrat (10) en superalliage à forte teneur en nickel avec la couche (25) d'acier faiblement allié, la couche (25) d'acier faiblement allié ayant une teneur en Cr inférieure à 5 %.

2. Procédé selon la revendication 1,
**caractérisé en ce que** l'on revêt le substrat métallique (10) avec la couche (25) d'acier faiblement allié par soudage au laser avec dépôt de poudre.

3. Procédé selon la revendication 1,
**caractérisé en ce que** l'on revêt le substrat métallique (10) avec la couche (25) d'acier faiblement allié par soudage au laser avec fil d'apport.

4. Procédé selon l'une quelconque des revendications 1-3,
**caractérisé en ce que** l'on revêt un substrat (10) en IN718 avec la couche (25) d'acier faiblement allié.

5. Procédé selon l'une quelconque des revendications précédentes,
**caractérisé en ce que** l'on revêt le substrat métallique (10) avec une couche (25) d'acier faiblement allié ayant une teneur en Cr inférieure à 4 % et, de manière particulièrement préférée, inférieure à 3 %.

6. Procédé selon la revendication 5,
**caractérisé en ce que** l'on revêt le substrat métallique (10) avec une couche (25) en EN25.

7. Procédé selon l'une quelconque des revendications précédentes,
**caractérisé en ce que** l'on revêt le substrat métallique (10) avec une couche (25) d'acier faiblement allié faisant 0,5 à 3,0 mm, de préférence 0,8 à 2,5 mm et, de manière particulièrement préférée, 1,0 à 2,0 mm d'épaisseur.

8. Procédé selon l'une quelconque des revendications précédentes,
**caractérisé en ce que** l'on revêt un tourillon (10) d'arbre métallique avec une couche (25) d'acier faiblement allié.

9. Procédé selon la revendication 8,
**caractérisé en ce que** l'on revêt le tourillon (10) d'arbre métallique avec de multiples couches d'acier faiblement allié.

10. Composant métallique revêtu comportant un substrat métallique (10) revêtu d'une couche (25) d'acier faiblement allié,
étant entendu que l'on revêt le substrat métallique (10) avec la couche (25) d'acier faiblement allié par soudage au laser, **caractérisé en ce que** l'on revêt un substrat (10) en superalliage à forte teneur en nickel avec la couche (25) d'acier faiblement allié, la couche (25) d'acier faiblement allié ayant une teneur en Cr inférieure à 5 %.
